# EUROPEAN PATENT SPECIFICATION

(11) **EP 1 826 855 B1**
(45) Date of publication and mention of the grant of the patent: **04.11.2015**
(21) Application number: 07103069.6
(22) Date of filing: 26.02.2007
(51) Int. Cl.: H01M 8/04, H01M 8/10

(54) **Fuel cell system and method for starting high temperature polymer electrolyte membrane fuel cell stack**
Brennstoffzellensystem und Verfahren zum Starten von Hochtemperatur-Polymerelektrolytmembranbrennstoffzellstapeln
Système de pile à combustible et méthode pour démarrer une pile à combustible à membrane électrolyte polymère fonctionnant à haute température

(30) Priority: 27.02.2006 KR 20060018816
(43) Date of publication of application: 29.08.2007
(73) Proprietor: Samsung SDI Co., Ltd., Yongin-si, Gyeonggi-do (KR)
(72) Inventor: Kim, Ju Yong, c/o Legal & IP Team, Samung SDI Co., Ltd.,, Gyeonggi-do (KR); Lee, Dong Uk, c/o Legal & IP Team, Samung SDI Co., Ltd, Gyeonggi-do (KR)
(74) Representative: Walaski, Jan Filip

(56) References cited:
- US-A1- 2002 071 972
- US-A1- 2003 012 997
- US-A1- 2004 224 196
- US-A1- 2005 008 909
- US-A1- 2005 123 814

## Description

The present invention relates to a fuel cell system and to methods for starting a fuel cell stack and a fuel cell system using the same method, and more particularly, to a method for efficiently starting a high temperature polymer electrolyte membrane fuel cell stack and a fuel cell system using the same method.

A polymer electrolyte membrane fuel cell is a fuel cell that employs a polymer membrane having a hydrogen ion exchange property as an electrolyte. The polymer electrolyte membrane fuel cell has various names such as a solid polymer electrolyte fuel cell (SPEFC), a solid polymer fuel cell (SPFC), a polymer electrolyte fuel cell (PEFC), a proton-exchange membrane fuel cell (PEMFC), or a polymer electrolyte membrane fuel cell (PEMFC).

As compared with other fuel cells such as a phosphate fuel cell, a molten carbonate fuel cell, a solid oxide fuel cell, or an alkaline fuel cell, the PEMFC has advantages because the efficiency of the PEMFC is high due to low operational temperatures, current density and output density are large, and the PEMFC starts and responds quickly. Particularly, since the polymer membrane having hydrogen ion exchange property is used as an electrolyte, there is no loss in the electrolyte during the operation of the PEMFC. Further, a methanol reformer, which may use existing verified technology, can be easily coupled to the PEMFC. The PEMFC is relatively less vulnerable to the pressure variation of a reaction gas. Also, the PEMFC can be designed to have a simple structure, which is easily manufactured and to use various materials for the main body of the fuel cell. Moreover, the PEMFC can be used in various fields such as a power source for pollution-free cars, a local installation power source, a power source for a spacecraft, a transportable power source, and a military power source.

In general, the PEMFC is manufactured as a stack structure suitable for a large power output. In the stack, a membrane-electrode assembly (MEA) and a separator are alternately stacked. Here, the membrane-electrode assembly separates a cathode and an anode, passes ion materials produced by an electrochemical reaction, and generates electricity by an electromotive force applied between the cathode and the anode. Further, the separator is coupled to the electrodes of the membrane-electrode assembly to transfer electrons between the electrodes, to supply fuel and an oxidant, to discharge a reaction product, and to be a collector for each electrode.

The membrane-electrode assembly is constructed with a polymer electrolyte membrane, and porous anode and cathode electrodes placed on opposite sides of the polymer electrolyte membrane. As an example of the polymer electrolyte membrane, a widely used material is a perfluorosulfonic acid ion exchange membrane that contains sulfonic acid radical (-SO₃H) and employs the inherent proton conductivity of sulfonated polymer. For example, Nafion, Gore, Flemion and Aciplex are used as the polymer electrolyte membrane. Particularly, 1mol of the sulfonic acid radical can absorb about 10 mol of water, which represents a high proton conductivity of about 0.1 Scm⁻¹. The polymer electrolyte membrane fuel cell generally operates at a temperature between approximately 60°C and approximately 80°C due to the property of the sulfonic acid polymer, and requires external steam to show good performance.

The polymer membrane used for the electrolyte of the polymer electrolyte membrane fuel cell, however, is very expensive and it is difficult to adjust water content of the polymer membrane while the polymer electrolyte membrane fuel cell is operating. Further, the polymer electrolyte membrane fuel cell requires a steam feeder to supply proper steam to the electrolyte membrane while operating, so that it is difficult to achieve minimization and simplification of the structure of the polymer electrolyte membrane fuel cell. In addition, because the polymer electrolyte membrane fuel cell operates under a relatively lower temperature, it is hard to utilize waste heat generated from the polymer electrolyte membrane fuel cell and couple the polymer electrolyte membrane fuel cell with a reformer that operates under a relatively higher temperature. Also, because the polymer electrolyte membrane fuel cell employs platinum (Pt) for an electrode catalyst, the tolerance for carbon monoxide (CO) within reaction gas should be low and a catalyst impregnation rate should be lowered to reduce production costs.

To solve the foregoing problems, recently a polymer electrolyte membrane fuel cell has been researched which can operate at a high temperature without external steam. For example, a high temperature polymer electrolyte membrane fuel cell, which uses polybenzimidazole (PBI) doped with acid (phosphoric acid) instead of the sulfonated polymer, can operate at a high temperature between approximately 120°C and approximately 200°C without external steam.

Since the high temperature polymer electrolyte membrane fuel cell has an operating temperature between approximately 120°C and approximately 200°C, it takes a relatively long time to start the high temperature polymer electrolyte membrane fuel cell as compared with other polymer electrolyte membrane fuel cell.

It is therefore an object of the present invention to provide an improved fuel cell.

It is another object to provide a method for starting a high temperature polymer electrolyte membrane fuel cell stack.

It is yet another object of the present invention to provide a method for efficiently starting a high temperature polymer electrolyte membrane fuel cell stack, in which the conductive heat from a preheater and the off-gas (i.e., waste heat) from a fuel reformer are properly used to efficiently preheat and to quickly start the high temperature polymer electrolyte membrane fuel cell stack, thereby preventing an electrolyte membrane in the stack from being damaged.

It is still another object of the present invention to provide a fuel cell system using the above-described method for efficiently starting the high temperature polymer electrolyte membrane fuel cell stack.

US2002/0071972 discloses a fuel cell battery with heating and an improved cold-start performance. US2003/0012997 discloses a pressurised, integrated electrochemical converter energy system. US2004/0224196 discloses a thermally integrated fuel cell system.

US2005/008909 discloses controlling supply of off-gas from the fuel reformer to the stack based on the temperature of the stack, while US2005/123814 discloses using a resistive electric heater to preheat a fuel cell stack.

According to the invention, there is provided a method for starting a high temperature polymer electrolyte membrane fuel cell stack as claimed in claim 1.

According to the invention there is further provided a fuel cell system as claimed in claim 7.

Preferably, the stack is constructed with an electrolyte membrane using polybenzimidazole doped with acid.

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a schematic diagram of a fuel cell system using a starting method for a high temperature polymer electrolyte fuel cell stack constructed as an embodiment according to the principles of the present invention;
FIG. 2 is a flowchart of starting the high temperature polymer electrolyte fuel cell stack in an embodiment according to the principles of the present invention; and
FIG. 3 is a graph showing stack preheating times versus stack temperatures based on the starting method for the high temperature polymer electrolyte fuel cell stack in an embodiment according to the principles of the present invention and a comparative stack starting method, respectively.

Hereinafter, embodiments according to the present invention will be described with reference to the accompanying drawings, wherein like reference numerals refer to like elements.

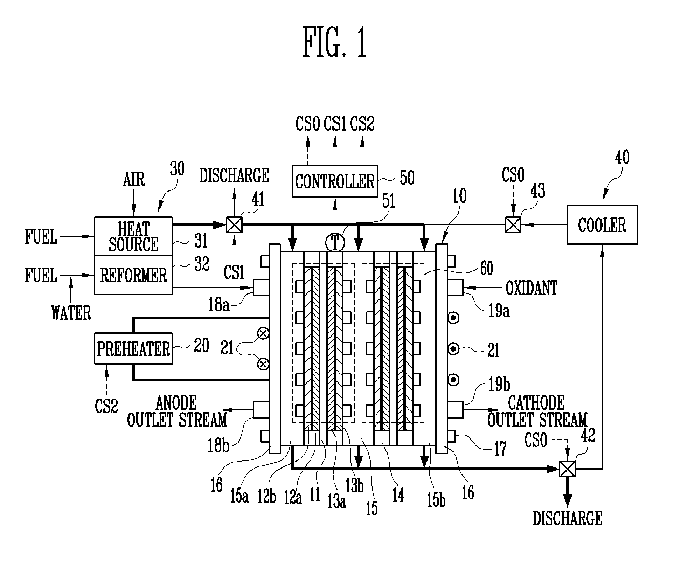

FIG. 1 is a schematic diagram of a fuel cell system using a starting method for a high temperature polymer electrolyte fuel cell stack constructed as an embodiment according to the principles of the present invention.

Referring to FIG. 1, a fuel cell system according to the principles of the present invention is constructed with a high temperature polymer electrolyte membrane fuel cell stack 10, a preheater 20, and a fuel reformer 30. Optionally, the fuel cell system can be constructed with a cooler 40. Further, the fuel cell system properly employs the conductive heat from preheater 20 and the off-gas from fuel reformer 30 to prevent an electrolyte membrane 11 in fuel cell stack 10 from being damaged and to quickly preheat electrolyte membrane 11.

Specifically, fuel cell stack 10 is constructed with electrolyte membrane 11, anode electrodes 12a and 12b, cathode electrodes 13a and 13b, a gasket 14, separators 15, 15a and 15b, an end plate 16, and a fastening means 17. Further, fuel cell stack 10 is constructed with an anode inlet 18a into which a reformed gas is introduced, a cathode inlet 19a into which an oxidant is introduced, an anode outlet 18b through which unreacted reformed gas and the other waste products are discharged, and a cathode outlet 19b through which water and the other waste products are discharged. Here, electrolyte membrane 11 and anode and cathode electrodes 12 and 13 placed on opposite sides of electrolyte membrane 11 form a membrane-electrode assembly (MEA) 60 as a unit cell.

Preferably, electrolyte membrane 11 contains polybenzimidazole doped with acid (phosphoric acid), which operates at a high temperature of approximately 200°C without steam. For example, the acid contains H₂SO₄ and H₃PO₄. Alternatively, electrolyte membrane 11 may contain at least one selected from a group of alkyl sulfonated polybenzimidazole, alkyl phosphated polybenzimidazole, phosphate containing acrylic-monomer-polymer, complex of polybenzimidazole/strong acid, complex of basic polymer/acid polymer, and derivatives therefrom. Still alternatively, electrolyte membrane 11 may contain one of sulfonated polyphenylene derivatives or sulfonated poly ether-ether-ketone (PEEK), obtained by applying a sulfonic radical to an engineering plastic. Yet still alternatively, electrolyte membrane 11 may contain at least one of a proton conductive electrolyte membrane with nano holes, an organic-inorganic proton conductive electrolyte membrane, a NAFION-zirconium phosphate electrolyte membrane (NAFION^{™} is available from E.I. DuPont de Nemours and Co.), NAFION 117 doped with phosphoric acid, and an electrolyte membrane strengthened with apatite.

Each of anode electrode 12 and cathode electrode 13 includes a catalyst layer 12a, 13a and a diffusion layer 12b and 13b. Diffusion layer 12b, 13b is constructed with a microporous layer and a backing layer. Catalyst layer 12a, 13a functions as a reaction accelerant to facilitate quick chemical reaction between a fuel and an oxidant supplied to each electrode. The microporous layer functions not only to uniformly distribute the fuel or the oxidant to catalyst layer 12a, 13a, but also to smoothly discharge water produced in cathode catalyst layer 13a. Here, the microporous layer can be achieved by a carbon layer coated on the backing layer. The backing layer supports each electrode, diffuses the fuel, water and air, collects generated electricity, and prevents catalyst layer 12a, 13a from wearing off. The backing layer can be made from carbon cloth, carbon paper, or other carbon material. Catalyst layer 12a, 13a contains a metal catalyst selected from a group of platinum (Pt), ruthenium (Ru), osmium (Os), Pt-Ru alloy, Pt-Os alloy, Pt-Pd alloy, and Pt-M alloy (where, M includes one or more transition metal selected from a group of Ga, Ti, V, Cr, Mn, Fe, Co, Ni, Cu and Zn). Alternatively, the catalyst layer may contain one or more metal catalyst selected from a group of Pt, Ru, Os, Pt-Ru alloy, Pt-Os alloy, Pt-Pd alloy, and Pt-M alloy (where, M includes one or more transition metal selected from a group of Ga, Ti, V, Cr, Mn, Fe, Co, Ni, Cu and Zn), which are supported by a supporter. Here, the supporter is made from any material as long as it can have conductivity. Preferably, the supporter is a carbon supporter. The microporous layer preferably contains one or more carbon material selected from a group of graphite, carbon nano tube (CNT), fullerene (C60), activated carbon, Vulcan, Ketjen black, carbon black, and carbon nano horn. Further, the microporous layer may contain one or more binders selected from a group consisting of poly (perfluorosulfonic acid), poly (tetrafluoroethylene) and fluorinated ethylene-prophylene.

Gasket 14 can be directly applied to a sealing-requiring part around an active area of fuel cell stack 10, or formed as a single plate to be interposed between membrane-electrode assembly 60 and separator 15, 15a, 15b, thereby preventing fluid leakage from passing through fuel cell stack 10. Here, gasket 14 can be achieved by an elastic member such as rubber, silicon, etc., or a metal plate.

Separator 15, 15a, 15b connects a plurality of membrane-electrode assemblies 60 in series to form a stack structure to provide a desired voltage. Further, separator 15, 15a, 15b collects electrons, transfers the electrons from anode electrode 12 to cathode electrode 13 through a wire, transfers the reformed gas containing abundant hydrogen to anode electrode 12 through a channel, and transfers air containing oxygen to cathode electrode 13. Further, separator 15, 15a, 15b supports the thin polymer electrolyte membrane 11 and anode and cathode electrodes 12 and 13. Separator 15, 15a, 15b can include a material having non-porousness for separating the fuel from the oxidant, good electric conductivity, and high heat conductivity for controlling the temperature of fuel cell stack 10. In addition, separator 15, 15a, 15b can include a material that is mechanically strong enough to stand the force for clamping fuel cell stack 10 and has corrosion resistance to a hydrogen ion.

Thus, membrane-electrode assembly 60, gasket 14 and separators 15, 15a, 15b are stacked; two end plates 16 are placed at opposite ends of the stacked structure, and are coupled by fastening means 17 such as a bolt and a nut, thereby forming fuel cell stack 10.

Further, fuel cell stack 10 generates electric energy and heat by an electrochemical reaction between the reformed gas introduced through anode inlet 18a and the oxidant introduced through cathode inlet 19a. Fuel cell stack 10 operates at a high temperature between approximately 120°C and approximately 200°C. Further, anode effusion such as the unreacted fuel and cathode effusion such as a reaction product are discharged through anode outlet 18b and cathode outlet 19b, respectively. The reaction in fuel cell stack 10 is as follows:

[formula 1] Anode: H₂(g) → 2H⁺ +2e⁻ Cathode: 1/2O₂(g) + 2H⁺ + 2e⁻ → H₂O(l) Total: H₂(g) + 1/2O₂(g) → H₂O(l) + electricity + heat

Referring to reaction formula 1, when the reformed gas is supplied to anode electrode 12 of membrane-electrode assembly 60 via separators 15, 15a and 15b, and when the oxidant (air) is supplied to cathode electrode 13, hydrogen contained in the reformed gas is separated into electrons and protons (hydrogen ion) while flowing toward anode electrode 12. The protons move through electrolyte membrane 11 and react with the oxygen ions produced in cathode electrode 13 and the electrons which have moved through an external wire (not shown), thereby producing water. Then, the anode effusion (unreacted reformed gas) and the cathode effusion (water, air) are discharged through anode outlet 18b and cathode outlet 19b of stack 10. Thus, the electrons moving through the external wire generate electricity, and the chemical reaction between hydrogen contained in the reformed gas and oxygen secondarily generate heat.

Preheater 20 is used for firstly preheating stack 10. Preheater 20 operates when the temperature of stack 10 is less than 100 °C. In the case where the temperature of stack 10 is less than 100 °C, if the off-gas consisting essentially of CO₂ and N₂ is supplied from fuel reformer 30 to the inside of stack 10, the phosphate impregnated in electrolyte membrane 11 in stack 10 may melt. To prevent electrolyte membrane 11 from melting, preheater 20 is used for quickly preheating the stack up to a temperature of 100 °C before supplying the off-gas to heat stack 10. Here, preheater 20 is constructed with a heating block 21 coupled to fuel cell stack 10, and heats fuel cell stack 10 by the conductive heat of heating block 21. Preferably, preheater 20 can be achieved by an electric heater that can have a simple structure and that can be easily installed. In this case, heating block 21 is made from a coil wrapped around the external surface of fuel cell stack 10. In FIG. 1, a mark (a circle with a dot inside) indicates that heating block 21 wrapped around stack 10 comes out of the surface of viewing, and a mark (⊗ ) (a circle with a cross inside) indicates that heating block 21 wrapped around stack 10 comes into the surface of viewing.

Fuel reformer 30 is constructed with a heat source 31 and a reformer 32. Further, fuel reformer 30 may be selectively constructed with a carbon monoxide remover. Heat source 31 is internally provided with a combustion catalyst, and the fuel is burned using air supplied to heat source 31, thereby generating heat and off-gas. The off-gas is supplied to stack 10 and used for preheating stack 10 when fuel cell stack 10 operates. Reformer 32 is internally provided with a reforming catalyst, and reformer 32 steam-reforms the fuel using the heat generated from heat source 30, thereby producing the reformed gas abundant with hydrogen. The reformed gas is supplied to fuel cell stack 10. The reforming catalyst is made from at least one material selected from a group of Cu/ZnO/Al₂O₃, Ni/Al₂O₃, Ru/ZrO₂, and Ru/Al₂O₃/Ru/CeO₂-Al₂O₃. Preferably, reformer 32 can employ a steam-reforming manner to obtain hydrogen with high concentration through a reaction between the hydrocarbonaceous fuel and steam, but the present invention is not limited thereto. Alternatively, reformer 32 may employ at least one of a preferential oxidation (PROX) manner, an auto thermal reforming (ATR) manner, a hydrocarbon analysis, and combination thereof besides the steam-reforming manner.

In the case where the carbon monoxide remover is provided in fuel reformer 30, the carbon monoxide remover is placed between reformer 32 and fuel cell stack 10, and removes a noxious material such as carbon monoxide from the reformed gas. For example, the carbon monoxide remover can be achieved by a water gas shift (WGS) reaction unit in which carbon monoxide and the steam added under a temperature of about 200°C are shifted into hydrogen and carbon dioxide. In this case, the carbon monoxide remover can include a catalyst such as Cr₂O₃/Fe₃O₄, Cu/ZnO/Al₂O₃, etc. Alternatively, the carbon monoxide remover can be achieved by a preferential CO oxidation (PROX) reaction unit in which carbon monoxide is shifted by oxidation reaction under a temperature between approximately 100°C and approximately 200°C into carbon dioxide, or achieved by a carbon monoxide reaction unit combined with the WGS reaction unit.

Cooler 40 functions to adjust the temperature of stack 10 such that fuel cell stack 10 operates at an optimum operating temperature. Cooler 40 is provided with a channel passing through fuel cell stack 10, and supplies a coolant to the channel, thereby cooling fuel cell stack 10 that has an excessive temperature which is higher than the operating temperature of the fuel cell stack. Cooler 40 can be achieved by various devices as long as they supply liquid or gas having a temperature lower than the excessive temperature when fuel cell stack 10 reaches the excessive temperature. The excessive temperature may be defined as a temperature higher than the operating temperature of the fuel cell stack.

A controller 50 receives an electric signal from a temperature measuring device 51 such as a temperature sensor to sense the temperature of stack 10, and determines the stack temperature on the basis of the electric signal. Further, controller 50 generates control signals CS0, CS1 and CS2 to control preheater 20, valves 41, 42 and 43, cooler 40 and temperature sensor 51. Valve 41 controls the flow of the off-gas generated from heat source 31, and valves 42 and 43 control the flow of the coolant supplied from cooler 40. For example, preheater 20 is driven to firstly preheat stack 10 until the stack temperature reaches 100 °C, and the channel of first valve 41 is opened to the air such that the off-gas is discharged from heat source 31 to the air. At the same time, the channels of second valve 42 and third valve 43 are closed. Then, when the stack temperature is more than 100°C but less than a limitation temperature (e.g., 200 °C), the channel of first valve 41 is opened to stack 10 such that the off-gas discharged from heat source 31 is used to heat stack 10. At the same time, the channel of second valve 42 is opened to the air, and third valve 43 is closed. Then, when the stack temperature is higher than the limitation temperature, the channels of second valve 42 and third valve 43 are opened and the channel of first valve 41 is closed such that the coolant from cooler 40 is circulated inside stack 10.

In the fuel cell system constructed as an embodiment according to the principles of the present invention, preheater 20 preheats stack 10 when fuel cell stack 10 operates, and then valves 41, 42 and 43 are controlled to supply the off-gas from fuel reformer 30 and to supply the coolant to the channel for transferring the coolant (hereinafter, referred to as a "cooling channel"), thereby further preheating stack 10. Then, the coolant is supplied when fuel cell stack 10 starts operating.

According to this embodiment, in the high temperature polymer electrolyte fuel cell using cooler 40, the off-gas of fuel reformer 30 is supplied through the cooling channel provided in stack 10, but the present invention is not limited thereto. Alternatively, for example, even though the high temperature polymer electrolyte fuel cell does not use cooler 40, the off-gas can be supplied through a channel separately provided in a separator or other facilities in fuel cell stack 10.

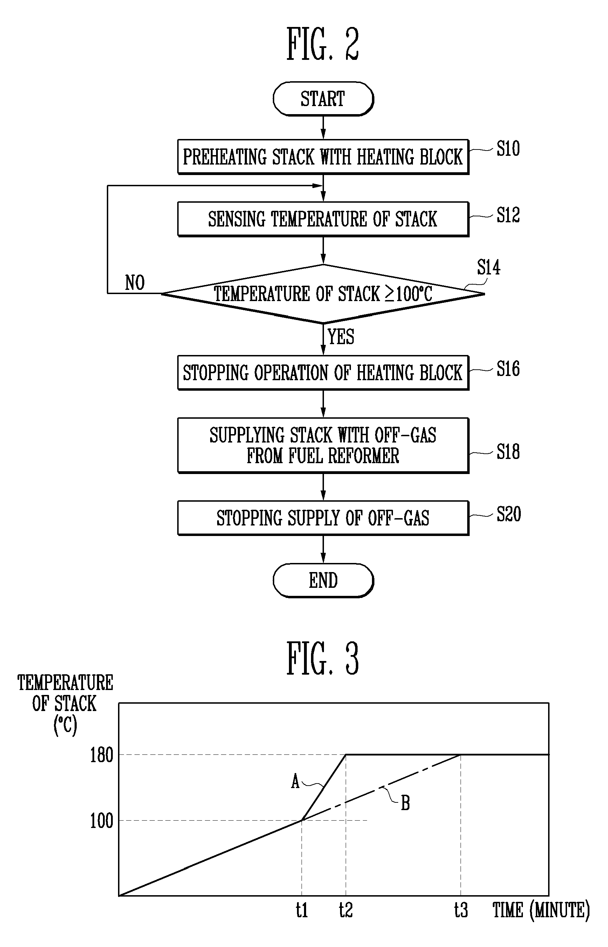

Below, operations of the fuel cell system will be described with reference to FIG. 2. FIG. 2 is a flowchart of starting the high temperature polymer electrolyte fuel cell stack in an embodiment according to the principles of the present invention.

Referring to FIG. 2, preheater 20 starts operation and preheats fuel cell stack 10 through heating block 21 (S10). In this step, in the polymer electrolyte fuel cell that electrochemically oxidizes the fuel received from fuel reformer 30 so as to generate electricity and operates at high temperature without external steam, a starting signal for starting the polymer electrolyte fuel cell is inputted to controller 40 of the fuel cell system, and then preheater 20 operates in response to a control signal from controller 40. Then, controller 40 determines the stack temperature using the temperature sensor 51 (S12). Here, temperature sensor 51 can be achieved by a thermistor.

Then, controller 50 compares the sensed stack temperature with a reference temperature (S14). In this step, controller 50 determines whether the stack temperature reaches the reference temperature, e.g., 100°C at which water boils.

If controller 50 determines that the sensed stack temperature reaches 100°C in step S14, controller 50 controls preheater 20 to stop operating heating block 21 (S16). On the other hand, if the sensed stack temperature does not reach 100°C, controller 50 controls temperature sensor 51 to sense the stack temperature at regular intervals or almost continuously until the stack temperature reaches 100°C.

When the stack temperature reaches 100°C, the high temperature off-gas is supplied from fuel reformer 30 to stack 10 (S18). This operation uses the off-gas to quickly preheat the stack that has been almost stably preheated by heating block 21. Here, the off-gas can be supplied through inner and/or outer channels having various structures to efficiently preheat stack 10. Preferably, a channel provided for other purposes can be used as the channel to supply the high temperature off-gas. For example, the cooling channel, which is already provided for preventing stack 10 from increasing in temperature excessively, can be used as the channel for supplying the off-gas. Alternatively, the channel for the off-gas may be separately provided for preheating the stack.

When the stack temperature reaches the operating temperature, controller 50 stops supplying the off-gas (S20). For example, if the operating temperature is 180°C, when the stack temperature reaches 180°C, controller 40 controls the valves placed between the fuel reformer and the stack to stop supplying the off-gas.

In the foregoing starting method, since the off-gas from fuel reformer 30 has a temperature much higher than the stack temperature before preheating, if the off-gas is supplied to stack 10 in the beginning of preheating stack 10, temperature difference between stack 10 and the off-gas causes condensed water to be introduced into stack 10, and the introduced water extracts acid (phosphoric acid) from electrolyte membrane 11 in the high temperature stack 10, thereby damaging electrolyte membrane 11. To avoid damaging the electrolyte membrane 11, stack 10 can be heated by an external heating structure. In this case, however, a pipe is additionally needed that at least partially surrounds stack 10, thereby causing a complicate structure and increasing a production cost.

Further, in the foregoing starting method, the reason why stack 10 is preheated to have a temperature of 100°C by the conductive heat of heating block 21 is that it is easy to adjust the temperature of heating block 21 through preheater 20 such that the condensed water is not introduced into stack 10. Also, the reason why heating block 21 is stopped at a temperature more than 100°C during the preheating of the high temperature stack 10 is that it is possible to reduce a cost of driving heating block 21.

FIG. 3 is a graph showing stack preheating times versus the stack temperature based on a method for starting a high temperature polymer electrolyte fuel cell stack in the embodiment according to the principles of the present invention and a comparative stack starting method, respectively.

In the fuel cell system using a method for starting the high temperature stack in the embodiment according to the principles of the present invention, as shown in 'A' of FIG. 3, after the high temperature stack starts operating, the high temperature stack is preheated by the conductive heat of the heating block for a first period of time t1, and then preheated by the off-gas from the fuel reformer for a second period of time (t2 - t1). On the other hand, in the fuel cell system using a heater as a preheating means according to the comparative example, as shown in 'B' of FIG. 3, the high temperature stack is preheated for a period of time t3 after the high temperature stack starts operating.

As shown in FIG. 3, the starting method for the high temperature stack in the embodiment according to the principles of the present invention can quickly preheat the stack as compared with that of the comparative example. Further, the starting method in the embodiment according to the principles of the present invention not only prevents the electrolyte membrane from being damaged due to the usage of the high temperature off-gas when the high temperature polymer electrolyte membrane fuel cell stack starts operating, but also stops operating the preheater after the lapse of first time t1. Thus, the starting method according to the principles of the present invention can quickly start the stack and reduce the cost as compared with the starting method of the comparative example.

In the meantime, the fuel cell system using the starting method for the high temperature fuel cell stack in the embodiment according to the principles of the present invention includes additional peripheral units such as a controller, which can sense the temperatures of an oxidant supplying means and the stack, compare the sensed temperature with a reference temperature, and generate a control signal according to the results of the comparison. Further, the combustion fuel and the reforming fuel supplied to the fuel reformer may be hydrocarbonaceous fuel such as gasoline, diesel, methanol, ethanol, natural gas, city gas, or other hydrocarbonaceous fuel. Also, the oxidant may be air or pure oxygen.

As described above, embodiments of the present invention provides a method for efficiently starting a high temperature polymer electrolyte membrane fuel cell stack and a fuel cell system using the same method, in which the conductive heat of a heating block (preheating unit) and off-gas of an existing fuel reformer are used in preheating the high temperature stack in two steps, thereby not only quickly starting the stack while preventing an electrolyte membrane in the high temperature stack from being damaged but also reducing a cost.

Although a few embodiments of the present invention have been shown and described, it would be appreciated by those skilled in the art that changes might be made in these embodiments without departing from the principles of the invention, the scope of which is defined in the claims.

## Claims

1. A method for starting a high temperature polymer electrolyte membrane fuel cell stack (10) that is arranged to receive a reformed fuel from a fuel reformer (30), the method comprising:
preheating the stack (10) through a heating block (21) coupled to the stack;
sensing the temperature of the stack (10);
making a comparison between the sensed temperature of the stack and a reference temperature; and
controlling supply of off-gas from the fuel reformer (30) to the stack in dependence on the comparison, wherein controlling supply of off-gas comprises supplying the off-gas from the fuel reformer when the temperature of the stack is equal to or higher than the reference temperature to further preheat the stack,
wherein the reference temperature is 100°C and the preheater operates when the temperature of the stack (10) is less than 100°C.

2. The method according to claim 1, further comprising controlling a valve (41) provided between the fuel reformer and the stack to stop supplying the off-gas when the temperature of the stack reaches an operating temperature.

3. The method according to claim 1 or 2, further comprising stopping the heating block from operating in dependence upon the comparison.

4. The method according to claim 3, comprising stopping the heating block from operating when the temperature of the stack is equal to or higher than the reference temperature.

5. The method according to any one of the preceding claims, comprising using the heating block to heat the stack by conduction.

6. The method according to any one of the preceding claims, comprising supplying the off-gas to a cooling channel for adjusting the temperature of the stack.

7. A fuel cell system comprising:
a fuel reformer (30) for reforming a fuel, the fuel reformer being arranged to produce off-gas;
a high temperature polymer electrolyte membrane fuel cell stack (10) for receiving the reformed fuel;
a preheater (20) coupled to the stack for preheating the stack;
a temperature sensor (51) for sensing the temperature of the stack; and
a controller (50) for controlling supply of the off-gas to the stack in dependence on a comparison between the stack temperature and a reference temperature, wherein the controller is arranged to supply the off-gas to additionally preheat the stack when the temperature of the stack sensed by the temperature sensor is equal to or higher than the reference temperature;
wherein the reference temperature is 100°C and the preheater (20) is arranged to operate when the temperature of the stack (10) is less than 100°C..

8. The fuel cell system according to claim 7, wherein the controller is arranged to stop operating the preheater when the temperature of the stack sensed by the temperature sensor is equal to or higher than the reference temperature.

9. The fuel cell system according to claim 7 or 8, further comprising a cooler (40) provided with a cooling channel passing through the stack to adjust the temperature of the stack, wherein the off-gas is supplied through the cooling channel.

10. The fuel cell system according to any one of claims 7 to 9, wherein the stack has an electrolyte membrane comprising polybenzimidazole doped with acid, or at least one selected from a group of alkyl sulfonated polybenzimidazole, alkyl phosphated polybenzimidazole, phosphate containing acrylic-monomer-polymer, complex of polybenzimidazole/strong acid, complex of basic polymer/acid polymer, and derivatives therefrom, or at least one of a sulfonated polyphenylene derivative or a sulfonated poly ether-ether-ketone (PEEK), or at least one of a proton conductive electrolyte membrane with nano holes, organic-inorganic proton conductive electrolyte membrane, a NAFION^{™}-zirconium phosphate electrolyte membrane, NAFION^{™} 117 doped with phosphoric acid, and an electrolyte membrane strengthened with apatite.

11. The fuel cell system according to any one of claims 7 to 10, wherein the preheater comprises a conductive heating unit (21) for heating the stack.

12. The fuel cell system according to any one of claims 7 to 11, wherein the fuel reformer comprises a heat source (31) to generate high temperature off-gas by burning the fuel, and a reformer (32) to steam-reform the fuel using the heat of the heat source.

## Patentansprüche

1. Verfahren zum Starten eines Hochtemperatur-Polymerelektrolytmembranbrennstoffzellstapels (10), der eingerichtet ist zum Aufnehmen eines reformierten Brennstoffs aus einer Brennstoffreformierungsanlage (30), wobei das Verfahren umfasst:
Vorwärmen des Stapels (10) mittels eines an den Stapel gekoppelten Heizblocks (21);
Erfassen der Temperatur des Stapels (10);
Anstellen eines Vergleichs zwischen der erfassten Temperatur des Stapels und einer Referenztemperatur; und
Regeln der Zufuhr von Abgas aus der Brennstoffrefoimierungsanlage (30) zu dem Stapel in Abhängigkeit von dem Vergleich, wobei das Regeln der Zufuhr von Abgas das Zuführen des Abgases aus der Brennstoffrefoimierungsanlage, wenn die Temperatur des Stapels gleich der oder höher als die Referenztemperatur ist, zum weiteren Vorwärmen des Stapels, umfasst,
wobei die Referenztemperatur 100 °C ist und der Vorwärmer arbeitet, wenn die Temperatur des Stapels (10) cerincer als 100 °C ist.

2. Verfahren nach Anspruch 1, weiterhin umfassend das Steuern eines Ventils (41), installiert zwischen der Brennstoffreformierungsanlage und dem Stapel, um das Zuführen des Abgases zu beenden, wenn die Temperatur des Stapels eine Betriebstemperatur erreicht.

3. Verfahren nach Anspruch 1 oder 2, weiterhin umfassend das Abschalten des Heizblocks in Abhängigkeit von dem Vergleich.

4. Verfahren nach Anspruch 3, umfassend das Abschalten des Heizblocks, wenn die Temperatur des Stapels gleich der oder höher als die Referenztemperatur ist.

5. Verfahren nach einem der vorangehenden Ansprüche, umfassend das Verwenden des Heizblocks zum Erwärmen des Stapels durch Leitung.

6. Verfahren nach einem der vorangehenden Ansprüche, umfassend das Zuführen des Abgases zu einem Kühlkanal zum Einstellen der Temperatur des Stapels.

7. Brennstoffzellensystem, umfassend:
eine Brennstoffrefoimierungsanlage (30) zum Reformieren eines Brennstoffs, wobei die Brennstoffrefoimierungsanlage zum Erzeugen von Abgas eingerichtet ist;
einen Hochtemperatur-Polymerelektrolytmembranbrennstoffzellstapel (10) zum Aufnehmen des reformierten Brennstoffs;
einen Vorwärmer (20), gekoppelt an den Stapel, zum Vorwärmen des Stapels;
einen Temperaturfühler (51) zum Erfassen der Temperatur des Stapels; und
einen Regler (50) zum Regeln der Zufuhr des Abgases zu dem Stapel in Abhängigkeit von einem Vergleich zwischen Temperatur des Stapels und einer Referenztemperatur, wobei der Regler eingerichtet ist zum Zuführen des Abgases zum weiteren Vorwärmen des Stapels, wenn die mit dem Temperaturfühler erfasste Temperatur des Stapels gleich der oder höher als die Referenztemperatur ist;
wobei die Referenztemperatur 100 °C ist und der Vorwärmer (20) so einceiichtet ist, dass er arbeitet, wenn die Temperatur des Stapels (10) geringer als 100 °C ist.

8. Brennstoffzellensystem nach Anspruch 7, wobei der Regler eingerichtet ist, den Vorwärmer abzuschalten, wenn die mit dem Temperaturfühler erfasste Temperatur des Stapels gleich der oder höher als die Referenztemperatur ist.

9. Brennstoffzellensystem nach Anspruch 7 oder 8, weiterhin umfassend einen Kühler (40), ausgestattet mit einem durch den Stapel verlaufenden Kühlkanal, um die Temperatur des Stapels einzustellen, wobei das Abgas durch den Kühlkanal zugeführt wird.

10. Brennstoffzellensystem nach einem der Ansprüche 7 bis 9, wobei der Stapel eine Elektrolytmembran, umfassend mit Säure dotiertes Polybenzimidazol oder mindestens eines, ausgewählt aus einer Gruppe von alkylsulfoniertem Polybenzimidazol, alkylphosphatiertem Polybenzimidazol, einem phosphathaltigem Acryl-Monomer-Polymer, einem Komplex von Polybenzimidazol und starker Säure, einem Komplex von basischem Polymer und saurem Polymer, und Derivaten davon, oder mindestens eines von einem sulfonierten Polyphenylenderivat oder einem sulfonierten Polyether-Ether-Keton (PEEK), oder mindestens eines von einer protonenleitenden Elektrolytmembran mit Nanolöchern, einer organisch-anorganischen protonenleitenden Elektrolytmembran, einer NAFION™-Zirconiumphosphat-Elektrolytmembran, mit Phosphorsäure dotiertem NAFION™ 117 und einer mit Apatit verfestigten Elektrolytmembran, besitzt.

11. Brennstoffzellensystem nach einem der Ansprüche 7 bis 10, wobei der Vorwärmer ein leitendes Heizelement (21) zum Erwärmen des Stapels umfasst.

12. Brennstoffzellensystem nach einem der Ansprüche 7 bis 11, wobei die Brennstoffreformierungsanlage eine Wärmequelle (31) zum Erzeugen von Abgas hoher Temperatur durch Verbrennen des Brennstoffs und einen Reformer (32) zum Dampfreformieren des Brennstoffs unter Verwendung der Wärme der Wärmequelle umfasst.

## Revendications

1. Procédé de démarrage d'une pile à combustible à membrane électrolyte polymère à haute température (10) qui est prévue pour recevoir un combustible reformé de la part d'un réformateur de combustible (30), le procédé comprenant :
le préchauffage de la pile (10) à l'aide d'un bloc de chauffage (21) relié à la pile ;
la détection de la température de la pile (10) ;
la réalisation d'une comparaison entre la température détectée de la pile et une température de référence ; et
le contrôle de l'approvisionnement en gaz d'échappement, par le réformateur de combustible (30), de la pile selon la comparaison, le contrôle de l'approvisionnement en gaz d'échappement comprenant l'approvisionnement en gaz d'échappement par le réformateur de combustible lorsque la température de la pile est égale ou supérieure à la température de référence, afin de préchauffer la pile,
dans lequel la température de référence est de 100 °C et le préchauffeur fonctionne lorsque la température de la pile (10) est inférieure à 100 °C.

2. Procédé selon la revendication 1, qui comprend en outre le contrôle d'une soupape (41) prévue entre le réformateur de combustible et la pile afin d'arrêter l'approvisionnement en gaz d'échappement lorsque la température de la pile atteint une température de fonctionnement.

3. Procédé selon la revendication 1 ou 2, qui comprend en outre l'arrêt du bloc de chauffage selon la comparaison.

4. Procédé selon la revendication 3, qui comprend l'arrêt du bloc de chauffage lorsque la température de la pile est égale ou supérieure à la température de référence.

5. Procédé selon l'une quelconque des revendications précédentes, qui comprend l'utilisation du bloc de chauffage pour chauffer la pile par conduction.

6. Procédé selon l'une quelconque des revendications précédentes, qui comprend l'approvisionnement en gaz d'échappement d'un canal de refroidissement destiné à régler la température de la pile.

7. Pile à combustible qui comprend :
un réformateur de combustible (30) destiné à reformer un combustible, le réformateur de combustible étant prévu pour produire un gaz d'échappement ;
une pile à combustible à membrane électrolyte polymère à haute température (10) destinée à recevoir le combustible reformé ;
un préchauffeur (20) relié à la pile afin de préchauffer la pile ;
un capteur de température (51) destiné à détecter la température de la pile ; et
un contrôleur (50) destiné à contrôler l'approvisionnement en gaz d'échappement de la pile en fonction d'une comparaison entre la température de la pile et une température de référence, le contrôleur étant prévu pour fournir le gaz d'échappement de façon à préchauffer à nouveau la pile lorsque la température de la pile détectée par le capteur de température est égale ou supérieure à une température de référence ;
dans lequel la température de référence est de 100 °C et le préchauffeur (20) est prévu pour fonctionner lorsque la température de la pile (10) est inférieure à 100 °C.

8. Pile à combustible selon la revendication 7, dans laquelle le contrôleur est prévu pour arrêter le préchauffeur lorsque la température de la pile détectée par le capteur de température est égale ou supérieure à la température de référence.

9. Pile à combustible selon la revendication 7 ou 8, qui comprend en outre un refroidisseur (40) muni d'un canal de refroidissement qui passe par la pile afin de régler la température de la pile, dans laquelle le gaz d'échappement est fourni par le canal de refroidissement.

10. Pile à combustible selon l'une quelconque des revendications 7 à 9, dans laquelle la pile possède une membrane à électrolyte qui comprend un polybenzimidazole dopé avec de l'acide, ou au moins un élément choisi parmi un groupe de polybenzimidazole alkylsulfonaté, de polybenzimidazole alkyle phosphaté, un monomère/polymère acrylique contenant un phosphate, un complexe de polybenzimidazole/d'acide fort, un complexe de polymère basique/de polymère acide, et des dérivés de ceux-ci, ou au moins l'un d'un dérivé de polyphénylène sulfonaté ou d'un polyétheréthercétone sulfonaté (PEEK), ou au moins l'une d'une membrane à électrolyte conducteur de protons avec des nano-orifices, d'une membrane à électrolyte conducteur de protons organique/inorganique, d'une membrane à électrolyte à phosphate de zirconium NAFION™, de NAFION™ 117 dopé avec de l'acide phosphorique, et d'une membrane à électrolyte renforcée avec de l'apatite.

11. Pile à combustible selon l'une quelconque des revendications 7 à 10, dans laquelle le préchauffeur comprend une unité de chauffage par conduction (21) destinée à chauffer la pile.

12. Pile à combustible selon l'une quelconque des revendications 7 à 11, dans laquelle le réformateur de combustible comprend une source de chaleur (31) destinée à générer un gaz d'échappement à haute température en brûlant le combustible, et un réformateur (32) destiné à reformer le combustible à la vapeur à l'aide de la chaleur de la source de chaleur.
